# EUROPEAN PATENT APPLICATION

(11) **EP 4 394 744 A1**
(43) Date of publication of application: **03.07.2024**
(21) Application number: 22861026.7
(22) Date of filing: 22.07.2022
(51) Int. Cl.: G09B 23/28

(54) **HUMAN BODY SIMULATION DEVICE**

(30) Priority: 27.08.2021 JP 2021138600
(71) Applicant: Asahi Intecc Co., Ltd., Seto-shi, Aichi 489-0071 (JP)
(72) Inventor: OOSHIMA Takashi, Seto-shi, Aichi 489-0071 (JP)
(74) Representative: Prinz & Partner mbB
(86) International application number: PCT/JP2022/028454
(87) International publication number: WO 2023/026735

(57) **Abstract**

A human body simulation device includes an organ model simulating an outer shape of an organ and having a liquid accommodating part, a gas-liquid separation tank having an internal space separately accommodating gas and liquid, and a gas supply/suction device supplying gas to the gas-liquid separation tank and sucking gas accommodated in the gas-liquid separation tank. The gas/liquid separation tank and the liquid accommodating part are connected by a communication member for flowing liquid accommodated in the gas/liquid separation tank, and when gas is supplied to the gas-liquid separation tank, the organ model expands by supplying an amount of liquid corresponding to the gas amount from the gas-liquid separation tank to the liquid accommodating part, and when gas is sucked from the gas-liquid separation tank, the organ model contracts by sucking an amount of liquid corresponding to the gas amount from the liquid accommodating part to the gas-liquid separation tank.

## Description

### TECHNICAL FIELD

The present invention relates to a human body simulation device.

### BACKGROUND ART

A medical device such as a catheter is used for minimally invasive treatment or examination inside a living body lumen such as a circulatory system or a digestive system. For example, Patent Literature 1 discloses a heart simulator that allows an operator, such as a doctor, to simulate a procedure using such a medical device. The heart simulator described in Patent Literature 1 includes a heart model having a plurality of mutually independent ventricles and a fluid supply/discharge device that supplies and discharges a fluid to and from the heart model, and causes the heart model to beat by supplying and discharging the fluid to and from each of the ventricles of the heart model. In addition, Patent Literature 2 discloses a liquid container capable of suppressing mixing of gas into a liquid to be accommodated.

### CITATION LIST

### Patent Literature

Patent Literature 1: JP 2006-276258 A
Patent Literature 2: JP 2019-1542 A

### SUMMARY OF INVENTION

### TECHNICAL PROBLEM

Herein, in order to perform a procedure while checking a behavior of a heart model or a medical device in the heart model, an operator such as a doctor acquires an X-ray image of the heart model and performs the procedure while checking the X-ray image. However, in the heart simulator described in Patent Literature 1, when a gas such as air is used as the fluid, there is a problem that air filled in the heart model appears white on the X-ray image and an X-ray image very different from an actual clinical image is acquired. In addition, in the heart simulator described in Patent Literature 1, when a liquid such as water is used as the fluid, an X-ray image close to an actual clinical image is acquired, but it is not easy to control the liquid in the fluid supply/discharge device without water leakage, and there is a problem in that operability is poor.

Further, in the technique described in Patent Literature 2, no consideration is given on using a liquid for beating of the heart model. Such a problem is not limited to a case of reproducing the beating of the heart model, but is a problem common to organ models of the human body, such as a case of simulating a movement of a diaphragm model associated with a respiratory motion, a case of simulating a movement of a lung model associated with the respiratory motion, and the like.

The present invention has been made to solve the above-described problems, and an object thereof is to make an X-ray image of an organ model closer to an actual clinical image, and to improve the operability of a human body simulation device.

### SOLUTION TO PROBLEM

The present invention has been made to solve at least a part of the above-described problems, and can be implemented as the following aspects.

(1) According to one aspect of the present invention, a human body simulation device is provided. The human body simulation device includes an organ model simulating an outer shape of an organ and having a liquid accommodating part, which is a space capable of accommodating a liquid therein, a gas-liquid separation tank having an internal space for accommodating a gas and a liquid in a separated state, and a gas supply/suction device that supplies a gas to the internal space of the gas-liquid separation tank or sucking the gas accommodated in the internal space of the gas-liquid separation tank. The internal space of the gas-liquid separation tank and the liquid accommodating part of the organ model are connected to each other by a communication member through which the liquid accommodated in the gas-liquid separation tank flows, and when a gas is supplied from the gas supply/suction device to the gas-liquid separation tank, a liquid in an amount corresponding to an amount of the supplied gas is supplied from the gas-liquid separation tank to the liquid accommodating part, whereby the organ model expands, and when a gas is sucked from the gas-liquid separation tank by the gas supply/suction device, a liquid in an amount corresponding to an amount of the sucked gas is sucked from the liquid accommodating part to the gas-liquid separation tank, whereby the organ model contracts.

According to this configuration, the organ model is expanded by supplying the liquid from the gas-liquid separation tank to the liquid accommodating part, and the organ model is contracted by sucking the liquid from the liquid accommodating part to the gas-liquid separation tank. Namely, since the liquid accommodating part of the organ model is filled with liquid such as water or physiological saline due to expansion and contraction of the organ model, it is possible to suppress white appearance on the X-ray image and to make the X-ray image of the organ model closer to an actual clinical image, compared to a case where the liquid accommodating part is filled with gas such as air. Further, when a gas is supplied from the gas supply/suction device to the gas-liquid separation tank, a liquid in an amount corresponding to an amount of the supplied gas is supplied from the gas-liquid separation tank to the liquid accommodating part, and when a gas is sucked from the gas-liquid separation tank by the gas supply/suction device, a liquid in an amount corresponding to an amount of the sucked gas is sucked from the liquid accommodating part to the gas-liquid separation tank. Namely, the supply and suction of the liquid by the gas-liquid separation tank are performed in response to the supply and suction of the gas by the gas supply/suction device. Therefore, in the gas supply/suction device, the gas can be controlled without water leakage, and the operability of the human body simulation device can be improved.

(2) In the human body simulation device according to the above-described aspect, the gas-liquid separation tank may include a partition member that partitions the internal space of the gas-liquid separation tank into a first space for accommodating a gas and a second space for accommodating a liquid, the second space being located below the first space in a vertical direction, and may have a first opening that connects the first space with an outside and a second opening that connects the second space with the outside, and may be connected to the gas supply/suction device via the first opening and connected to the liquid accommodating part of the organ model via the second opening.

According to this configuration, the gas-liquid separation tank includes the partition member that partitions the internal space of the gas-liquid separation tank into the first space for accommodating the gas and the second space for accommodating the liquid, and the gas-liquid separation tank is connected to the gas supply/suction device via the first opening that connects the first space with the outside and is connected to the liquid accommodating part of the organ model via the second opening that connects the second space with the outside. Therefore, when the gas is supplied from the gas supply/suction device into the first space, and therefore, it is possible to suppress an occurrence of cavitation in the liquid in the second space due to the presence of the partition member between the first and second spaces. Further, when the gas in the first space is sucked by the gas supply/suction device, it is possible to suppress entry of the liquid into the first space due to the presence of the partition member between the first and second spaces. As a result, the operability of the human body simulation device can be further improved.

(3) In the human body simulation device according to the above-described aspect, the partition member may have a flat plate shape having a first main surface facing the first space and a second main surface facing the second space, and the partition member may further include a through-hole penetrating the first main surface and the second main surface formed therein.

According to this configuration, since the partition member has a flat plate shape having the first main surface facing the first space and the second main surface facing the second space, it is possible to effectively suppress mixing of air bubbles into the liquid in the second space and entry of the liquid into the first space. In addition, the second space is positioned below the first space in the vertical direction, and a through-hole penetrating the first main surface and the second main surface is formed in the partition member. Therefore, the liquid supplied into the first space can be guided to the second space via the through-hole of the partition member.

(4) The human body simulation device according to the above-described aspect may further include a control device that controls a supply amount and a supply time of the gas by the gas supply/suction device and a suction amount and a suction time of the gas by the gas supply/suction device, wherein the control device repeats a motion of causing the gas supply/suction device to supply a first predetermined amount of gas to the gas-liquid separation tank for a first predetermined time and then causing the gas supply/suction device to suck a second predetermined amount of gas from the gas-liquid separation tank for a second predetermined time, and when the gas supply/suction device supplies the gas to the gas-liquid separation tank for the first time after the control device is started, the supply of the first predetermined amount of gas to the gas-liquid separation tank may be performed for a third predetermined time that is longer than the first predetermined time.

According to this configuration, since the control device repeats the motion of causing the gas supply/suction device to supply the first predetermined amount of gas to the gas-liquid separation tank for the first predetermined time and then causing the gas supply/suction device to suck the second predetermined amount of gas from the gas-liquid separation tank for the second predetermined time, it is possible to regularly expand and contract the organ model. In addition, when the gas supply/suction device supplies the gas to the gas-liquid separation tank for the first time after the control device is started, the control device causes the first predetermined amount of gas to be supplied to the gas-liquid separation tank for the third predetermined time that is longer than the first predetermined time. Therefore, it is possible to suppress damage to the organ model due to rapid expansion.

(5) In the human body simulation device according to the above-described aspect, the organ model may be a heart model simulating an outer shape of a heart, and the gas supply/suction device and the gas-liquid separation tank may function as a heartbeat portion that simulates beating of the heart model by expanding and contracting the heart model.

According to this configuration, a human body simulation device having a beating heart model can be provided.

(6) In the human body simulation device according to the above-described aspect, the organ model may be a diaphragm model simulating an outer shape of a diaphragm, and the gas supply/suction device and the gas-liquid separation tank may function as a respiratory motion portion that simulates a movement of the diaphragm model associated with a respiratory motion by expanding and contracting the diaphragm model.

According to this configuration, it is possible to provide a human body simulation device having a diaphragm model that moves in association with a respiratory motion.

Note that the present invention can be achieved in various aspects, for example, a human body simulation device, a heart simulator including a heart model, a diaphragm simulator including a diaphragm model, a lung simulator including a lung model, and a method of controlling these devices.

### BRIEF DESCRIPTION OF DRAWINGS

Fig. 1 is an explanatory diagram illustrating a configuration of a human body simulation device.
Fig. 2 is an explanatory diagram illustrating a configuration of a model.
Fig. 3 is an explanatory diagram illustrating a configuration of a heartbeat portion.
Fig. 4 is an explanatory diagram illustrating a sectional configuration of a gas-liquid separation tank.
Fig. 5A and Fig. 5B are each a diagram for explaining a motion of expanding and contracting a heart model.
Fig. 6A and Fig. 6B are each a diagram for explaining a motion of expanding and contracting the heart model.
Fig. 7A and Fig. 7B are each a diagram for explaining a motion of expanding and contracting the heart model.
Fig. 8A and Fig. 8B are each a diagram for explaining a motion of expanding and contracting the heart model.
Fig. 9 is an explanatory diagram illustrating a configuration of a gas-liquid separation tank according to a second embodiment.
Fig. 10 is an explanatory diagram illustrating a configuration of a gas-liquid separation tank according to a third embodiment.
Fig. 11 is an explanatory diagram illustrating a configuration of a model according to a fourth embodiment.
Fig. 12 is an explanatory diagram illustrating a configuration of a human body simulation device according to a fifth embodiment.
Fig. 13 is an explanatory diagram illustrating a configuration of a model according to the fifth embodiment.

### EMBODIMENTS OF THE INVENTION

### <First Embodiment>

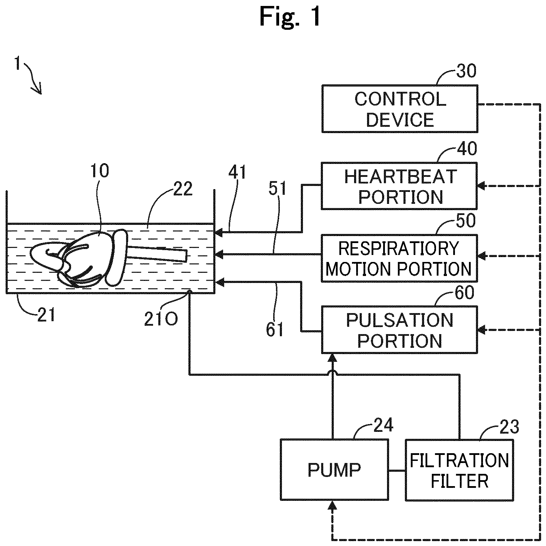

Fig. 1 is an explanatory diagram illustrating a configuration of a human body simulation device 1. The human body simulation device 1 according to the present embodiment is a device used for simulating a procedure of treatment or examination using medical devices for minimally invasive treatment or examination, such as a catheter and a guide wire, in a living body lumen such as a circulatory system, a digestive system, or a respiratory system of a human body. The human body simulation device 1 includes a model 10, a water tank 21, a filtration filter 23, a pump 24, a control device 30, a heartbeat portion 40, a respiratory motion portion 50, and a pulsation portion 60.

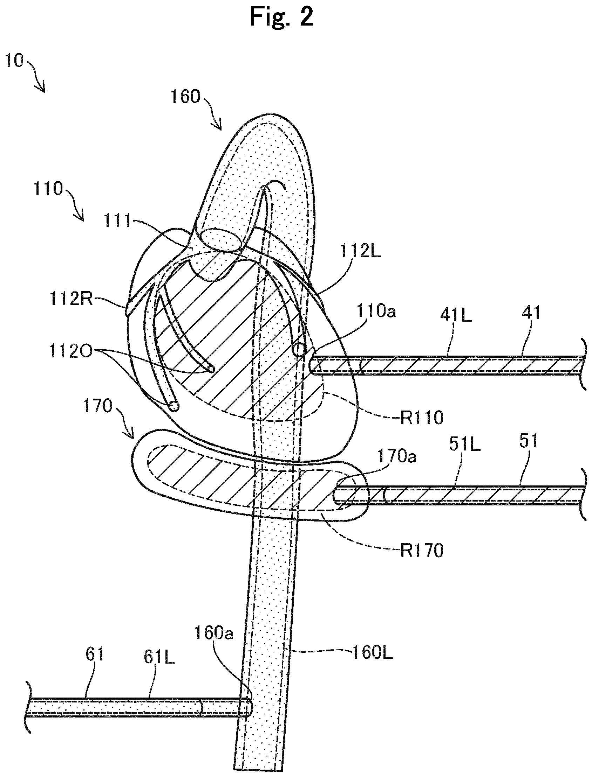

Fig. 2 is an explanatory diagram illustrating a configuration of the model 10. As illustrated in Fig. 2, the model 10 includes a heart model 110 simulating an outer shape of a heart of a human body, an aorta model 160 simulating an outer shape of an aorta of the human body, and a diaphragm model 170 simulating an outer shape of a diaphragm of the human body. Hereinafter, the heart model 110 and the diaphragm model 170 are also referred to as "organ models". Details of the model 10 will be described later. In Fig. 2, a portion through which a liquid 22 (simulated blood) flows is indicated by dot hatching, and a portion through which a liquid for expansion/contraction of the heart model 110 and the diaphragm model 170 flows is indicated by oblique hatching.

The water tank 21 is a substantially rectangular parallelepiped water tank whose upper part is opened. As illustrated in Fig. 1, the model 10 is submerged in the liquid 22 by placing the model 10 on a bottom surface of the water tank 21 in a state where an inside of the water tank 21 is filled with the liquid 22. As a result, the model 10 can be maintained in a wet state similarly to the actual human body. Note that water, physiological saline, an aqueous solution of an arbitrary compound, or the like can be adopted as the liquid 22. The liquid 22 filled in the water tank 21 is taken into the aorta model 160 and functions as simulated blood that simulates blood. The water tank 21 may be further provided with a wave-eliminating plate for covering a surface of the liquid 22. When the wave-eliminating plate is used, waving generated on the surface of the liquid 22 can be suppressed, and visibility of the model 10 can be improved. The water tank 21 and the wave-eliminating plate can be formed of a synthetic resin (for example, acrylic resin) having X-ray permeability and high transparency, or an optional material.

The control device 30 is configured by, for example, a personal computer, and includes a CPU, a ROM, a RAM, a storage portion, and an input/output interface, which are not illustrated. The control device 30 controls the heartbeat portion 40, the respiratory motion portion 50, the pulsation portion 60, and the pump 24 by loading a computer program stored in the ROM into the RAM and executing the computer program (Fig. 1: broken line arrows). As the input/output interface of the control device 30, an optional device, for example, a touch panel, a keyboard, an operation button, an operation dial, a foot switch, a microphone, a monitor, an indicator, a speaker, or the like can be used.

The heartbeat portion 40 simulates the beating of the heart model 110 by expanding and contracting the heart model 110 of the model 10. Specifically, the heartbeat portion 40 expands the heart model 110 by supplying a liquid into the heart model 110. Further, the heartbeat portion 40 contracts the heart model 110 by sucking the liquid inside the heart model 110. Details will be described later. The respiratory motion portion 50 expands and contracts the diaphragm model 170 of the model 10, and thereby simulates a movement of the diaphragm model 170 associated with the respiratory motion. Specifically, the respiratory motion portion 50 expands the diaphragm model 170 by supplying a liquid into the diaphragm model 170. In addition, the respiratory motion portion 50 contracts the diaphragm model 170 by sucking the liquid inside the diaphragm model 170. Details will be described later.

The filtration filter 23 is connected to an opening 210 provided in the water tank 21 via a tubular body. The filtration filter 23 removes impurities (for example, a contrast medium used in a procedure) in the liquid 22 by filtering the liquid 22 passing through the filtration filter 23. The pump 24 is connected downstream of the filtration filter 23 and circulates the filtered liquid 22 at a constant flow rate. As the pump 24, for example, a non-positive displacement type centrifugal pump can be used. The pulsation portion 60 has a built-in pulsation pump, and simulates blood flow from the aorta model 160 by delivering the liquid 22 to which pulsation is applied to an inner cavity 160L of the aorta model 160 (Fig. 2). As the pulsation pump, for example, a positive displacement reciprocating pump or a rotary pump operated at a low speed can be used.

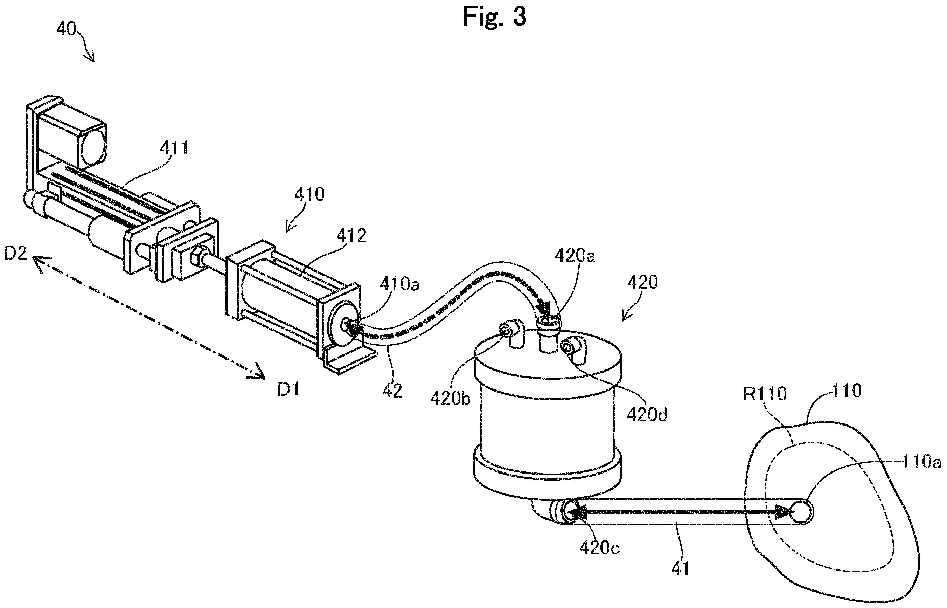

As illustrated in Fig. 2, the heart model 110 of the model 10 has an outer shape simulating an outer shape of the heart of the human body. A liquid accommodating part R110, which is a space capable of accommodating a liquid, is provided inside the heart model 110. The liquid accommodating part R110 communicates with an outside via an opening 110a provided at an arbitrary position in the heart model 110. The liquid accommodating part R110 is connected to the heartbeat portion 40 (to be specific, a gas-liquid separation tank 420 to be described in Fig. 3) by a first communication member 41 attached to a position where the opening 110a is provided in the heart model 110. The first communication member 41 is a tubular member having a first lumen 41L therein, and is used for allowing the liquid accommodated in the heartbeat portion 40 (to be specific, the gas-liquid separation tank 420) to flow.

A heart blood vessel model 111 and a coronary artery model 112 are provided on an outer surface of the heart model 110. The heart blood vessel model 111 is a tubular blood vessel model simulating a part of the ascending aorta. A proximal end of the heart blood vessel model 111 is connected in a state in which the lumen thereof is made to communicate with the aorta model 160. The distal end of the heart blood vessel model 111 is connected in a state in which the lumen thereof is made to communicate with the coronary artery model 112. The coronary artery model 112 is a tubular blood vessel model simulating a coronary artery. As illustrated in Fig. 2, the coronary artery model 112 includes a tubular right coronary artery model 112R representing the right coronary artery and a tubular left coronary artery model 112L representing the left coronary artery. A distal end of each of the right coronary artery model 112R and the left coronary artery model 112L is provided with a distal end opening 1120 that allows the lumen of each of the coronary artery models 112R and L to communicate with the outside.

The aorta model 160 of the model 10 has an outer shape simulating the outer shape of the aorta of the human body. The inner cavity 160L through which a fluid is made to flow is provided inside the aorta model 160. The inner cavity 160L communicates with the outside via an opening 160a provided at an optional position in the aorta model 160. The inner cavity 160L of the aorta model 160 is connected to the pulsation portion 60 (Fig. 2) by a third communication member 61 attached to a position where the opening 160a is provided in the aorta model 160. The third communication member 61 is a tubular member having a third lumen 61L therein, and is used for allowing the liquid 22 delivered from the pulsation portion 60 to flow. To be specific, the liquid 22 (simulated blood) delivered from the pulsation portion 60 advances in the inner cavity 160L of the aorta model 160 toward the heart model 110 via the third lumen 61L, passes through an inner cavity of a heart blood vessel model 111 and inner cavities of coronary artery models 112R and L, and is discharged from the distal end opening 1120 into the water tank 21.

The diaphragm model 170 of the model 10 has an outer shape simulating the outer shape of the diaphragm of the human body. Inside the diaphragm model 170, a liquid accommodating part R170, which is a space capable of accommodating liquid, is provided. The liquid accommodating part R170 communicates with the outside via an opening 170a provided at an arbitrary position in the diaphragm model 170. The diaphragm model 170 is connected to the respiratory motion portion 50 by a second communication member 51 attached to a position where the opening 170a is provided in the diaphragm model 170. The second communication member 51 is a tubular member having a second lumen 51L therein, and is used for allowing the liquid accommodated in the respiratory motion portion 50 to flow.

The heart model 110, the heart blood vessel model 111, the coronary artery model 112, the aorta model 160, the diaphragm model 170, the first communication member 41, the second communication member 51, and the third communication member 61 can be formed of a known material in addition to a soft synthetic resin (for example, silicon, etc.) having X-ray permeability. In addition, the first communication member 41, the second communication member 51, and the third communication member 61 may be formed of a synthetic resin having X-ray permeability and a higher rigidity than silicon or the like. The heart model 110, the heart blood vessel model 111, the coronary artery model 112, the aorta model 160, the diaphragm model 170, the first communication member 41, the second communication member 51, and the third communication member 61 may be formed of the same material or may be formed of different materials.

Fig. 3 is an explanatory diagram illustrating a configuration of the heartbeat portion 40. As illustrated in Fig. 3, the heartbeat portion 40 of the present embodiment is composed of a gas supply/suction device 410 and a gas-liquid separation tank 420.

The gas supply/suction device 410 is a device that supplies gas to the gas-liquid separation tank 420 or sucks the gas inside the gas-liquid separation tank 420. The gas supply/suction device 410 includes an electric actuator 411 and an air cylinder 412. The electric actuator 411 is a device that electrically drives a piston disposed in an internal space of the air cylinder 412. The air cylinder 412 is made of metal, and a piston is disposed in an internal space thereof. When the electric actuator 411 moves the piston in a D1 direction in Fig. 3, the gas compressed by the piston in a housing of the air cylinder 412 is delivered to the outside via a cylinder opening 410a of the air cylinder 412. In addition, when the electric actuator 411 moves the piston in a D2 direction in Fig. 3, a negative pressure is generated in the housing of the air cylinder 412, and external gas is sucked through the cylinder opening 410a of the air cylinder 412. A supply amount and a supply time of the gas by the gas supply/suction device 410, and a suction amount and a suction time of the gas by the gas supply/suction device are controlled by the control device 30 (Fig. 1).

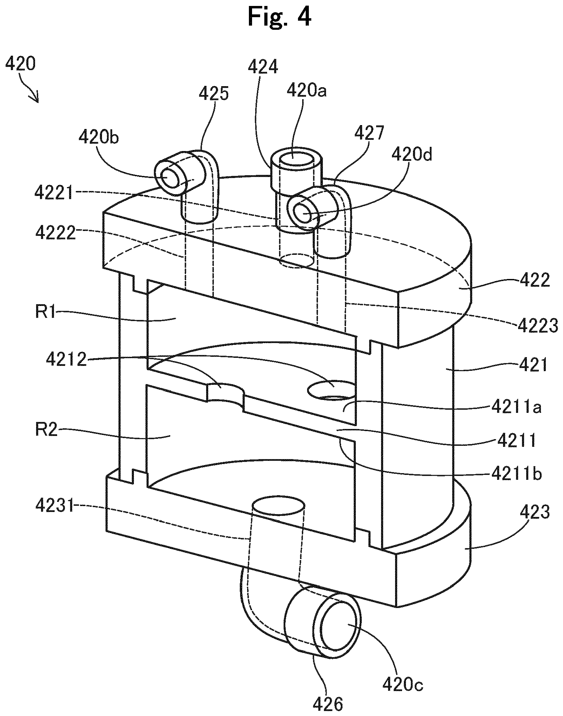

Fig. 4 is an explanatory diagram illustrating a sectional configuration of the gas-liquid separation tank 420. The gas-liquid separation tank 420 is a device having internal spaces R1 and R2 for accommodating gas and liquid in a separated state. As illustrated in Fig. 4, the gas-liquid separation tank 420 of the present embodiment includes a main body part 421, an upper housing 422, a lower housing 423, a first connection portion 424, a second connection portion 426, a third connection portion 425, a fourth connection portion 427, and a partition member 4211.

The main body part 421 is a cylindrical container. The upper housing 422 is a lid provided on an upper side of the main body part 421 in a vertical direction, and has a disk shape. In the upper housing 422, three through-holes 4221, 4222, and 4223 (Fig. 4: broken lines), which connect an upper surface and a lower surface of the upper housing 422 in the vertical direction, are formed. The lower housing 423 is a bottom plate provided on a lower side of the main body part 421 in the vertical direction, and has a disk shape. In the lower housing 423, a through-hole 4231 (Fig. 4: broken line), which connects an upper surface and a lower surface of the lower housing 423 in the vertical direction, is formed.

The first connection portion 424 is a straight joint, and is attached to the upper housing 422 at a position where the through-hole 4221 is provided. Hereinafter, among openings at both ends of the first connection portion 424, the opening exposed to the outside is also referred to as a "first opening 420a". The first opening 420a is an opening through which an internal space (a first space R1) of the gas-liquid separation tank 420 communicates with the outside. The second connection portion 426 is an L-shaped joint, and is attached to the lower housing 423 at a position where the through-hole 4231 is provided. Hereinafter, among openings at both ends of the second connection portion 426, the opening exposed to the outside is also referred to as a "second opening 420c". The second opening 420c is an opening through which an internal space (a second space R2) of the gas-liquid separation tank 420 communicates with the outside.

The third connection portion 425 is an L-shaped joint, and is attached to the upper housing 422 at a position where the through-hole 4222 is provided. Hereinafter, among openings at both ends of the third connection portion 425, the opening exposed to the outside is also referred to as a "third opening 420b". The third opening 420b is an opening that allows the internal space (first space R1) of the gas-liquid separation tank 420 to communicate with the outside. The fourth connection portion 427 is an L-shaped joint, and is attached to the upper housing 422 at a position where the through-hole 4223 is provided. Hereinafter, among openings at both ends of the fourth connection portion 427, the opening exposed to the outside is also referred to as a "fourth opening 420d". The fourth opening 420d is an opening that allows the internal space (first space R1) of the gas-liquid separation tank 420 to communicate with the outside.

The partition member 4211 is a member for partitioning the internal space of the gas-liquid separation tank 420 into a first space R1 and a second space R2, and has a circular flat plate shape along an internal wall of the main body part 421. Herein, the first space R1 means a space for accommodating gas in the internal space of the gas-liquid separation tank 420. The second space R2 means a space for accommodating liquid in the internal space of the gas-liquid separation tank 420. As illustrated, the second space R2 is provided below the first space R1 in the vertical direction (in other words, on a side where the lower housing 423, the second connection portion 426, and the second opening 420c are provided). Such a positional relationship between the first space R1 and the second space R2 results from a structure in which the gas-liquid separation tank 420 separates gas and liquid from each other by gravity.

Of a pair of main surfaces 4211a and 4211b of the partition member 4211, a surface facing the first space R1 is referred to as a first main surface 4211a, and a surface facing the second space R2 is referred to as a second main surface 4211b. As illustrated in Fig. 4, a through-hole 4212 penetrating the first main surface 4211a and the second main surface 4211b is formed in the partition member 4211. In the example of the present embodiment, three circular through-holes 4212 are formed in the partition member 4211, and the three through-holes 4212 are provided at positions equally spaced apart from the center of the partition member 4211 (note that Fig. 4 is a cross-sectional view, and therefore only two through-holes 4212 are illustrated). Note that the inner diameter, number, and shape of the through-holes 4212 are merely examples, and can be arbitrarily changed.

Note that at least some of the main body part 421, the upper housing 422, the lower housing 423, the first connection portion 424, the second connection portion 426, the third connection portion 425, the fourth connection portion 427, and the partition member 4211, which are described above, may be integrally configured instead of being separate members. For example, the main body part 421 and the partition member 4211 may be integrally configured. For example, the upper housing 422, the first connection portion 424, the third connection portion 425, and the fourth connection portion 427 may be integrally configured. Further, at least some of the first connection portion 424, the second connection portion 426, and the third connection portion 425 may be omitted. For example, when the first connection portion 424 is omitted, an opening of the through-hole 4221 of the upper housing 422, which is exposed to the outside, is equivalent to the "first opening 420a". Similarly, when the third connection portion 425 is omitted, an opening of the through-hole 4222 of the upper housing 422, which is exposed to the outside, is equivalent to the "third opening 420b". When the second connection portion 426 is omitted, an opening of the through-hole 4231 of the lower housing 423, which is exposed to the outside, is equivalent to the "second opening 420c".

Returning to Fig. 3, description will be continued. The gas supply/suction device 410 is connected to the first space R1 of the gas-liquid separation tank 420 by the communication member 42. The communication member 42 is a tubular member having a lumen therein, and is used for allowing gas between the gas supply/suction device 410 and the gas-liquid separation tank 420 to flow. One end of the communication member 42 is attached to the gas supply/suction device 410 via the cylinder opening 410a. Another end of the communication member 42 is attached to the gas-liquid separation tank 420 via a first opening 420a (Fig. 4: first connection portion 424). A lumen in the communication member 42 functions as a flow path through which gas flows between the gas supply/suction device 410 and the gas-liquid separation tank 420.

The second space R2 of the gas-liquid separation tank 420 is connected to the liquid accommodating part R110 of the heart model 110 by the first communication member 41. As described above, the first communication member 41 is a tubular member having a first lumen 41L therein, and is used for allowing liquid between the gas-liquid separation tank 420 and the heart model 110 to flow. One end of the first communication member 41 is attached to the gas-liquid separation tank 420 via the second opening 420c (Fig. 4: second connection portion 426). Another end of the first communication member 41 is attached to the heart model 110 via the opening 110a. Namely, as indicated by a solid line arrow in Fig. 3, the first lumen 41L in the first communication member 41 functions as a flow path through which the liquid flows between the gas-liquid separation tank 420 and the heart model 110.

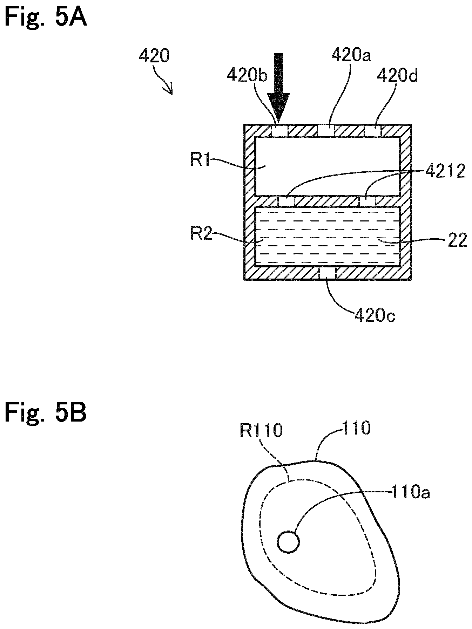

Figs. 5A to 8B are diagrams for explaining the expansion/contraction motion of the heart model 110. Fig. 5A illustrates a state for preparing the gas-liquid separation tank 420 in advance. Fig. 5B illustrates a state of the heart model 110 at the time of Fig. 5A. First, as an advance preparation, the second space R2 of the gas-liquid separation tank 420 is filled with a liquid (for example, water, physiological saline, etc.). The filling of the liquid can be performed by attaching a hose with an air valve (not illustrated) to each of the third connection portion 425 and the fourth connection portion 427, supplying the liquid to the first space R1 via the third opening 420b of the third connection portion 425, and discharging the internal gas from the first space R1 via the fourth opening 420d of the fourth connection portion 427. The liquid supplied from the third opening 420b passes through the first space R1 and is filled in the second space R2 via the through-holes 4212 of the partition member 4211. Herein, a volume of the liquid to be filled is desirably equal to or less than an inner volume of the second space R2. After filling of the liquid is completed, the third opening 420b and the fourth opening 420d are each sealed by closing the air valve, and leakage of gas and liquid from the third opening 420b and the fourth opening 420d is suppressed.

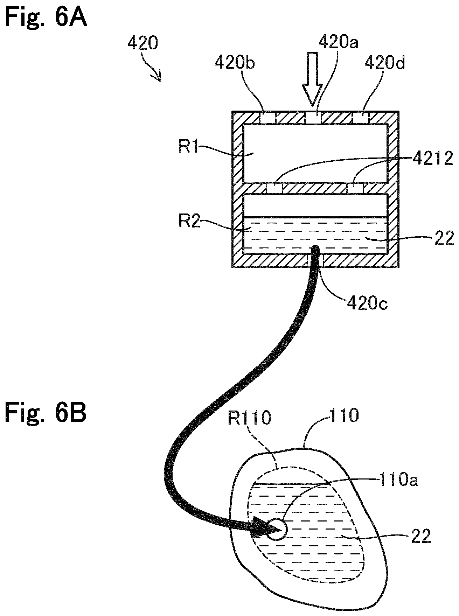

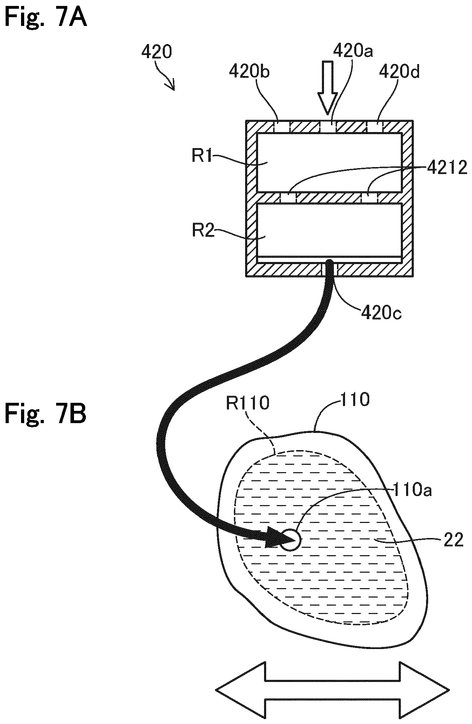

Fig. 6A illustrates a state of the gas-liquid separation tank 420 when a gas is supplied. Fig. 6B illustrates a state of the heart model 110 at the time of Fig. 6A. After filling the second space R2 of the gas-liquid separation tank 420 with liquid, as indicated by an open arrow in Fig. 6A, a gas is supplied from the gas supply/suction device 410 to the gas-liquid separation tank 420. Then, as indicated by a black arrow in Figs. 6A and 6B, a liquid in an amount corresponding to an amount of the supplied gas is supplied from the second space R2 of the gas-liquid separation tank 420 to the liquid accommodating part R110 of the heart model 110 via the first lumen 41L of the first communication member 41. Fig. 7A illustrates a state of the gas-liquid separation tank 420 when a gas is further supplied. Fig. 7B illustrates a state of the heart model 110 at the time of Fig. 7A. When the supply of the gas from the gas supply/suction device 410 to the gas-liquid separation tank 420 is further continued, the heart model 110 formed of a soft raw material expands in accordance with an increase in volume of the liquid in the liquid accommodating part R110 as indicated by an open arrow in Fig. 7B.

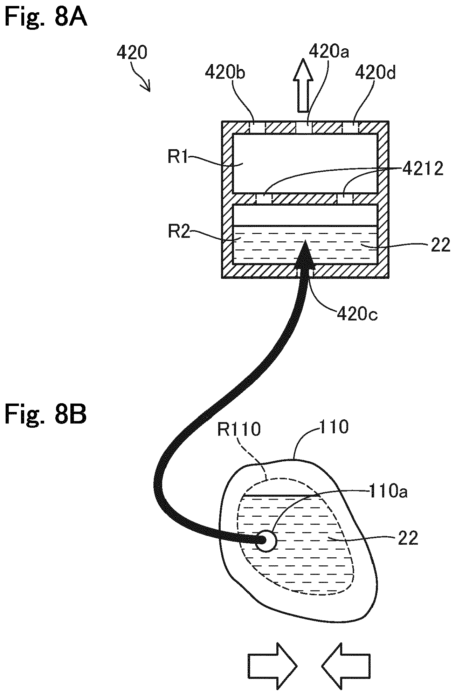

Fig. 8A illustrates a state of the gas-liquid separation tank 420 when a gas is sucked. Fig. 8B illustrates a state of the heart model 110 at the time of Fig. 8A. After expansion of the heart model 110, as indicated by an open arrow in Fig. 8A, a gas is sucked from the gas-liquid separation tank 420 by the gas supply/suction device 410. Then, as indicated by black arrows in Figs. 8A and 8B, a liquid in an amount corresponding to an amount of the sucked gas is sucked from the liquid accommodating part R110 of the heart model 110 to the second space R2 of the gas-liquid separation tank 420 via the first lumen 41L of the first communication member 41. As a result, the heart model 110 formed of a soft raw material contracts in accordance with reduction in volume of the liquid in the liquid accommodating part R110, as indicated by an open arrow in Fig. 8B.

The control device 30 (Fig. 1) repeats the following processes a1 and a2, thereby regularly expanding/contracting the heart model 110 and simulating the beating of the heart model 110.
(a1) The control device 30 causes the gas supply/suction device 410 to supply a first predetermined amount of gas to the gas-liquid separation tank 420 for a first predetermined time.
(a2) The control device 30 causes the gas supply/suction device 410 to suck a second predetermined amount of gas from the gas-liquid separation tank 420 for a second predetermined time.

Herein, the first predetermined amount and the second predetermined amount can be optionally determined depending on a target value of the size of the heart model 110 at the time of expansion. The first predetermined amount and the second predetermined amount may be or may not be the same. The first predetermined time can be optionally determined depending on a target value of the time required for the heart model 110 to expand. The second predetermined time can be optionally determined depending on a target value of the time required for the heart model 110 to contract. The first predetermined time and the second predetermined time may be or may not be the same.

When the gas supply/suction device 410 supplies a gas to the gas-liquid separation tank 420 for the first time (in other words, when the process a1 is performed for the first time) after the control device 30 is started, the control device 30 desirably causes the gas supply/suction device 410 to supply the first predetermined amount of gas to the gas-liquid separation tank 420 for a third predetermined time. The third predetermined time is longer than the first predetermined time described above. In this way, the control device 30 can slowly expand the heart model 110 over time only when the process a1 is performed for the first time.

The respiratory motion portion 50 in Fig. 1 also has the same configuration as the heartbeat portion 40 described with reference to Figs. 3 to 8. Namely, the respiratory motion portion 50 includes a gas supply/suction device and a gas-liquid separation tank. When a gas is supplied from the gas supply/suction device to the gas-liquid separation tank, a liquid in an amount corresponding to an amount of the supplied gas is supplied from the gas-liquid separation tank to a liquid accommodating part R170 of the diaphragm model 170, whereby the diaphragm model 170 expands. Further, when a gas is sucked from the gas-liquid separation tank by the gas supply/suction device, a liquid in an amount corresponding to an amount of the sucked gas is sucked from the liquid accommodating part R170 of the diaphragm model 170 to the gas-liquid separation tank, whereby the diaphragm model 170 contracts. As for the respiratory motion portion 50, the control device 30 also controls the supply amount and the supply time of the gas by the gas supply/suction device and the suction amount and the suction time of the gas by the gas supply/suction device.

As described above, according to the human body simulation device 1 of the first embodiment, the heart model 110 (organ model) is expanded by supplying the liquid from the gas-liquid separation tank 420 to the liquid accommodating part R110 of the heart model 110 as described with reference to Figs. 6B and 7B, and the heart model 110 is contracted by sucking the liquid from the liquid accommodating part R110 of the heart model 110 to the gas-liquid separation tank 420 as described with reference to Fig. 8B. Namely, since the liquid accommodating part R110 of the heart model 110 is filled with liquid such as water or physiological saline in order to expand and contract the heart model 110, it is possible to suppress white appearance on the X-ray image and make the X-ray image of the heart model 110 closer to an actual clinical image, compared to a case where the liquid accommodating part R110 is filled with gas such as air. As described with reference to Figs. 6A and 7A, when the gas is supplied from the gas supply/suction device 410 to the gas-liquid separation tank 420, the liquid in an amount corresponding to the amount of the supplied gas is supplied from the gas-liquid separation tank 420 to the liquid accommodating part R110 of the heart model 110, and as described with reference to Fig. 8A, when the gas is sucked from the gas-liquid separation tank 420 by the gas supply/suction device 410, the liquid in an amount corresponding to the amount of the sucked gas is sucked from the liquid accommodating part R110 of the heart model 110 to the gas-liquid separation tank 420. Namely, the supply and suction of the liquid by the gas-liquid separation tank 420 are performed in accordance with the supply and suction of the gas by the gas supply/suction device 410. Therefore, the gas can be controlled without water leakage in the gas supply/suction device 410 and the operability of the human body simulation device 1 can be improved.

According to the human body simulation device 1 according to the first embodiment, as described with reference to Fig. 4, the gas-liquid separation tank 420 includes a partition member 4211 that partitions the internal space of the gas-liquid separation tank 420 into the first space R1 for accommodating gas and the second space R2 for accommodating liquid. In addition, as described with reference to Fig. 3, the gas-liquid separation tank 420 is connected to the gas supply/suction device 410 via the first opening 420a that connects the first space R1 with the outside, and is connected to the liquid accommodating part R110 of the heart model 110 (organ model) via the second opening 420c that connects the second space R2 with the outside. Therefore, when the gas is supplied from the gas supply/suction device 410 into the first space R1, it is possible to suppress the occurrence of cavitation in the liquid in the second space R2 due to the presence of the partition member 4211 between the first and second spaces R1 and R2. Further, when the gas in the first space R1 is sucked by the gas supply/suction device 410, it is possible to suppress entry of the liquid into the first space R1 due to the presence of the partition member 4211 between the first and second spaces R1 and R2. As a result, the operability of the human body simulation device 1 can be further improved.

Furthermore, according to the human body simulation device 1 according to the first embodiment, as described with reference to Fig. 4, since the partition member 4211 of the gas-liquid separation tank 420 has a flat plate shape having a first main surface 4211a facing the first space R1 and a second main surface 4211b facing the second space R2, it is possible to effectively suppress mixing of air bubbles into the liquid in the second space R2 and entry of the liquid into the first space R1. In addition, the second space R2 is positioned below the first space R1 in the vertical direction, and the through-holes 4212 penetrating the first main surface 4211a and the second main surface 4211b are formed in the partition member 4211. Therefore, as described with reference to Fig. 5A and Fig. 5B, the liquid supplied into the first space R1 can be guided to the second space R2 via the through-holes 4212 of the partition member 4211.

Further, according to the human body simulation device 1 according to the first embodiment, the control device 30 repeats the motion of causing the gas supply/suction device 410 to supply the first predetermined amount of gas to the gas-liquid separation tank 420 for the first predetermined time (process a1) and then causing the gas supply/suction device 410 to suck the second predetermined amount of gas from the gas-liquid separation tank 420 for the second predetermined time (process a2). Therefore, the heart model 110 (organ model) can be regularly expanded and contracted. When the gas supply/suction device 410 supplies the gas to the gas-liquid separation tank 420 for the first time after the control device 30 is started, the control device 30 supplies the first predetermined amount of gas to the gas-liquid separation tank 420 for the third predetermined time that is longer than the first predetermined time. Therefore, it is possible to suppress damage of the heart model 110 due to the rapid expansion.

As described above, according to the configuration of the first embodiment, it is possible to provide the human body simulation device 1 having the beating heart model 110. In addition, it is possible to provide the human body simulation device 1 including the diaphragm model 170 that moves in association with the respiratory motion.

### <Second Embodiment>

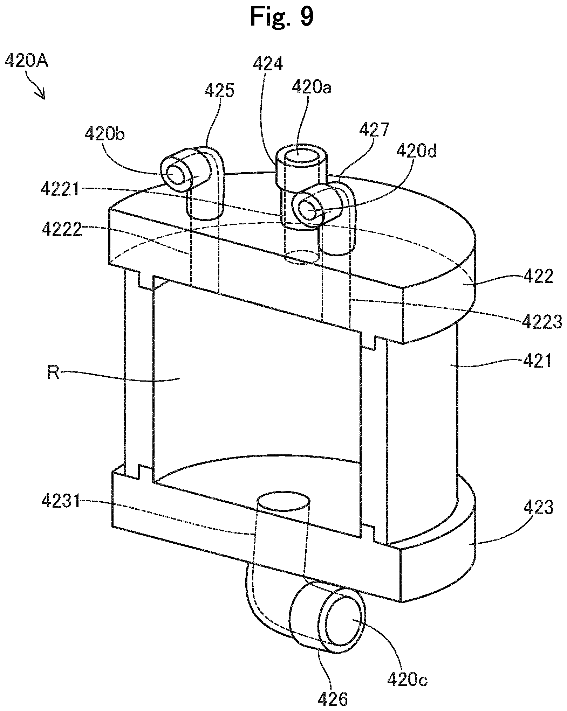

Fig. 9 is an explanatory diagram illustrating a configuration of a gas-liquid separation tank 420A according to a second embodiment. A human body simulation device 1 according to the second embodiment includes the gas-liquid separation tank 420A to be illustrated in Fig. 9, instead of the gas-liquid separation tank 420 described with reference to Fig. 4. The gas-liquid separation tank 420A does not include the partition member 4211 in the configuration described in Fig. 4, and has a single internal space R. As described with reference to Fig. 5A, when the liquid is supplied to the gas-liquid separation tank 420A, the liquid is accumulated on a lower side thereof in a vertical direction due to gravity and the gas is accumulated on an upper side thereof in the vertical direction in the internal space R, and thus the gas and the liquid are accommodated in a separated state. Therefore, the gas-liquid separation tank 420A can also expand and contract the heart model 110 by the same motion as described with reference to Figs. 5 to 8.

As described above, the configuration of the gas-liquid separation tank 420A can be variously changed, and the gas-liquid separation tank 420A may be configured to have a single internal space R. Such a human body simulation device 1 having the gas-liquid separation tank 420A according to the second embodiment can also exhibit similar effects to those of the first embodiment described above.

### <Third Embodiment>

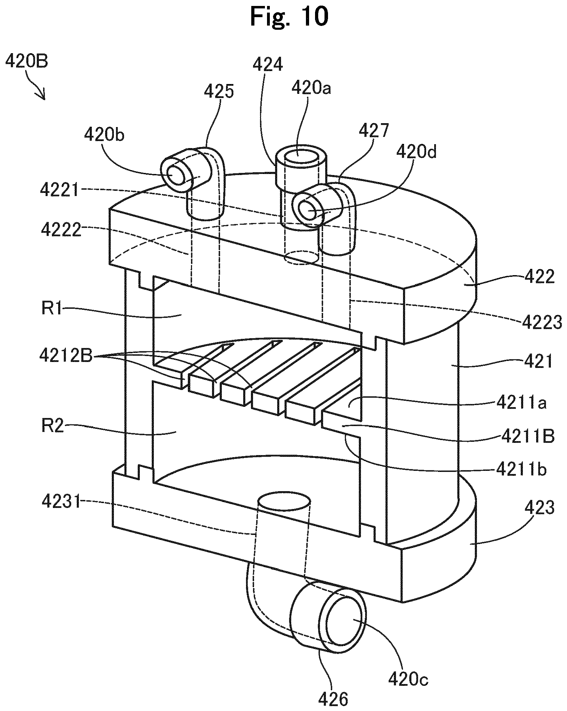

Fig. 10 is an explanatory diagram illustrating a configuration of a gas-liquid separation tank 420B according to a third embodiment. A human body simulation device 1 according to the third embodiment includes a gas-liquid separation tank 420B to be illustrated in Fig. 10 instead of the gas-liquid separation tank 420 described with reference to Fig. 4. The gas-liquid separation tank 420B includes a partition 4211B instead of the partition member 4211 in the configuration described with reference to Fig. 4. As illustrated in Fig. 10, five through-holes 4212B penetrating a first main surface 4211a and a second main surface 4211b are formed in the partition member 4211B. These five through-holes 4212B are each linear and are arranged at equal intervals.

As described above, the configuration of the gas-liquid separation tank 420B can be variously changed, and a partition member 4211B having a different number and shape of through-holes 4212B from those in the first embodiment may be provided. A width, the number, and shape of the through-holes 4212B are merely examples, and can be optionally changed. Further, the through-holes 4212B may not be arranged at equal intervals. Such a human body simulation device 1 having the gas-liquid separation tank 420B according to the third embodiment can also exhibit similar effects to those of the first embodiment described above.

### <Fourth Embodiment>

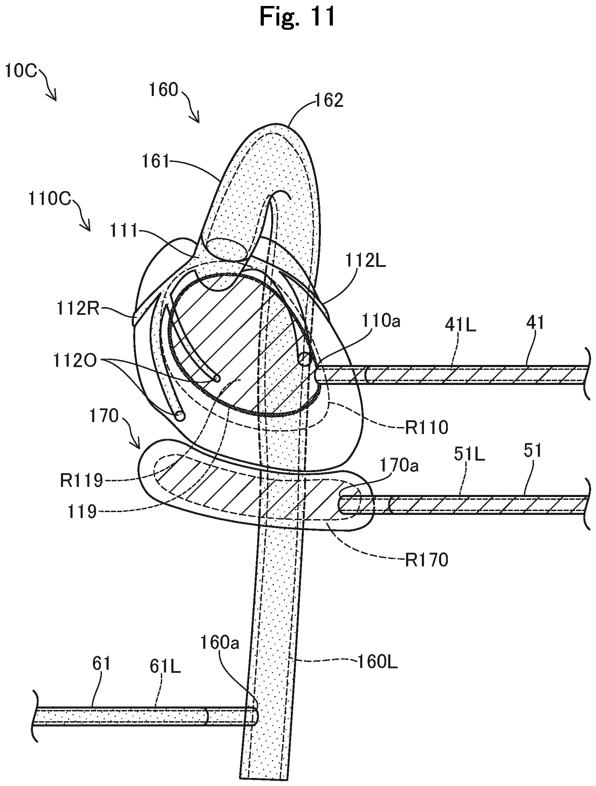

Fig. 11 is an explanatory diagram illustrating a configuration of a model 10C according to a fourth embodiment. A human body simulation device 1 according to the fourth embodiment includes a model 10C to be illustrated in Fig. 11 instead of the model 10 described with reference to Fig. 2. The model 10C includes a heart model 110C instead of the heart model 110. The heart model 110C further includes a balloon 119 accommodated in an internal space of the heart model 110C in the configuration described with reference to Fig. 2. The balloon 119 is formed of a material that is an elastic body such as rubber, or a soft synthetic resin (for example, silicon, etc.) and transmits radiation. The balloon 119 is connected to the heartbeat portion 40 (Fig. 3: the first opening 420a of the gas-liquid separation tank 420) by the first communication member 41. Accordingly, the inside of the balloon 119 functions as a liquid accommodating part R119, which is a space capable of accommodating liquid.

As described above, the configuration of the model 10C can be variously changed, and the balloon 119 may be accommodated in the internal space of the heart model 110C, and the internal space of the balloon 119 may function as the liquid accommodating part R119. In the example of Fig. 11, the heart model 110C has the balloon 119 built-in, but the diaphragm model 170 may have the balloon built-in instead of the heart model 110C or together with the heart model 110C. Such a human body simulation device 1 having the model 10C according to the fourth embodiment can also exhibit similar effects to those of the first embodiment described above. In the human body simulation device 1 according to the fourth embodiment, water leakage from the heart model 110C (organ model) can be further suppressed.

### <Fifth Embodiment>

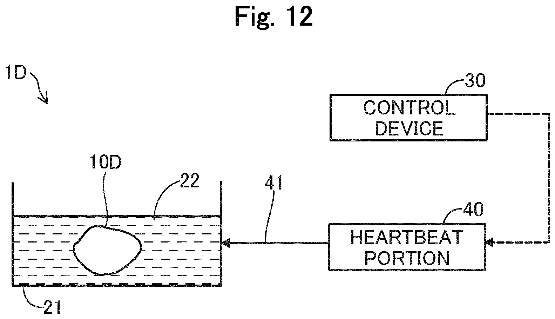

Fig. 12 is an explanatory diagram illustrating a configuration of a human body simulation device 1D according to a fifth embodiment. The human body simulation device 1D according to the fifth embodiment includes a model 10D instead of the model 10 and does not include the filtration filter 23, the pump 24, the respiratory motion portion 50, and the pulsation portion 60, in the configuration described with reference to Fig. 1.

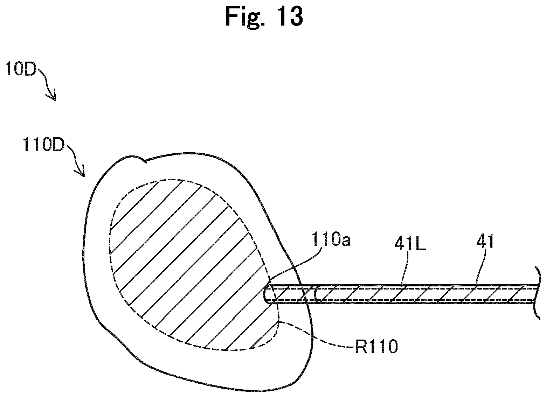

Fig. 13 is an explanatory diagram illustrating a configuration of the model 10D according to the fifth embodiment. The model 10D according to the fifth embodiment includes a heart model 110D instead of the heart model 110 and does not include the aorta model 160 and the diaphragm model 170, in the configuration described with reference to Fig. 2. As illustrated in Fig. 13, the heart model 110D does not include the heart blood vessel model 111 and the coronary artery model 112 described with reference to Fig. 2. Namely, in the human body simulation device 1D according to the fifth embodiment, only beating of the heart model 110D due to the expansion and suction of the heart model 110D is simulated.

As described above, the configuration of the human body simulation device 1D can be variously changed, and the simulation of blood flow from the aorta model 160 may be omitted by omitting the aorta model 160, the filtration filter 23, the pump 24, and the pulsation portion 60. Further, by omitting the diaphragm model 170 and the respiratory motion portion 50, the simulation of the movement of the diaphragm model 170 associated with the respiratory motion may be omitted. In the example of Fig. 13, both the aorta model 160 and the diaphragm model 170 are omitted, but only one of them may be omitted. Such a human body simulation device 1D according to the fifth embodiment can also exhibit similar effects to those of the first embodiment described above. Further, in the human body simulation device 1D according to the fifth embodiment, the configuration of the human body simulation device 1D can be simplified.

### <Modifications of the embodiments>

The present invention is not limited to the embodiments described above and can be implemented in various aspects without departing from the spirit thereof, and for example, the following modifications are also possible.

### [Modified Example 1]

In the first to fifth embodiments, examples of the configurations of the human body simulation devices 1 and 1D have been described. However, the configuration of the human body simulation device 1 can be variously changed. For example, in the human body simulation device 1, the model 10 may not be in a state of being immersed in the liquid 22 in the water tank 21. In this case, the water tank 21 can be omitted. For example, the human body simulation device 1 may include other medical apparatuses (for example, an FPD apparatus, a CT apparatus, an MRI apparatus, etc.) which are not illustrated. For example, the human body simulation device 1 may include other medical devices (for example, a catheter, a monorail guide wire, a penetrating guide wire, etc.) which are not illustrated.

### [Modified Example 2]

In the first to fifth embodiments, examples of the configurations of the models 10, 10C and 10D have been described. However, the configuration of the model 10 can be variously changed. For example, the model 10 may include other organ models, muscle models, blood vessel models, and the like, which are not described above, such as a lung model simulating an outer shape of a lung of a human body, a brain model simulating an outer shape of a brain of a human body, and a lower limb model simulating an outer shape of a lower limb of a human body. When the model 10 is configured to include a lung model, a configuration similar to that of the diaphragm model 170 described above can be applied to the lung model, whereby a movement of the lung model associated with the respiratory motion can be simulated. For example, the inside of each of the heart models 110, 110C, and 110D may be divided into a plurality of spaces simulating atria or ventricles. In this case, the spaces are desirably connected to each other in such a way that the spaces are filled with liquid supplied from the gas-liquid separation tank 420.

### [Modified Example 3]

In the first and fifth embodiments, configuration examples of the configuration of the heartbeat portion 40 have been described. However, the configuration of the heartbeat portion 40 can be variously changed. For example, the gas supply/suction device 410 may be manually operated instead of being electrically operated. For example, at least one of the first opening 420a, the third opening 420b, and the second opening 420c of the gas-liquid separation tank 420 may be provided in the main body part 421. For example, the gas supply/suction device 410 and the gas-liquid separation tank 420 may be configured as a single device.

### [Modified Example 4]

The configurations of the human body simulation devices 1 and 1D according to the first to fifth embodiments and the configurations according to the first to third modified examples may be appropriately combined. For example, the human body simulation device 1 may be configured by combining the gas-liquid separation tank 420A or B described in any one of the second and third embodiments with the model 10C described in the fourth embodiment.

Although the present aspects have been described based on the embodiments and the modified examples, the embodiments of the above-described aspects are for facilitating understanding of the present aspects, and do not limit the present aspects. The present aspects can be modified and improved without departing from the spirit thereof and the scope of the claims, and include equivalents thereof. Furthermore, unless the technical features are described as essential in the present specification, they can be deleted as appropriate.

### DESCRIPTION OF REFERENCE NUMERALS

- 1, 1D: Human body simulation device
- 10, 10C, 10D: Model
- 21: Water tank
- 22: Liquid
- 23: Filtration filter
- 24: Pump
- 30: Control device
- 40: Heartbeat portion
- 41: First communication member
- 42: Communication member
- 50: Respiratory motion portion
- 51: Second communication member
- 60: Pulsation portion
- 61: Third communication member
- 110,: 110C 110D Heart model
- 111: Heart blood vessel model
- 112: Coronary artery model
- 112L: Left coronary artery model
- 112R: Right coronary artery model
- 119: Balloon
- 160: Aorta model
- 170: Diaphragm model
- 410: Gas supply/suction device
- 411: Electric actuator
- 412: Air cylinder
- 420, 420A to 420D: Gas-liquid separation tank
- 420a: First opening
- 420b: Third opening
- 420c: Second opening
- 420d: Fourth opening
- 421, 421C, 421D: Main body part
- 422, 422C, 422D: Upper housing
- 423: Lower housing
- 424: First connection portion
- 425: Third connection portion
- 426: Second connection portion
- 427: Fourth connection portion
- 4211, 4211B, 4211C, 4211D: Partition member
- 4212,: 4212B Through-hole
- 4213, 4221, 4222, 4223, 4231: Through-hole
- R: Internal space
- R1: First space
- R110: Liquid accommodating part
- R2: Second space

## Claims

1. A human body simulation device comprising:
an organ model that simulates an outer shape of an organ and has a liquid accommodating part being a space capable of accommodating a liquid therein;
a gas-liquid separation tank having an internal space for accommodating a gas and a liquid in a separated state; and
a gas supply/suction device that supplies a gas to the internal space of the gas-liquid separation tank or sucks a gas accommodated in the internal space of the gas-liquid separation tank,
wherein the internal space of the gas-liquid separation tank and the liquid accommodating part of the organ model are connected by a communication member allowing a liquid accommodated in the gas-liquid separation tank to flow through,
when a gas is supplied from the gas supply/suction device to the gas-liquid separation tank, a liquid in an amount corresponding to an amount of the supplied gas is supplied from the gas-liquid separation tank to the liquid accommodating part, whereby the organ model expands, and
when a gas is sucked from the gas-liquid separation tank by the gas supply/suction device, a liquid in an amount corresponding to an amount of the sucked gas is sucked from the liquid accommodating part to the gas-liquid separation tank, whereby the organ model contracts.

2. The human body simulation device according to claim 1, wherein the gas-liquid separation tank
includes a partition member that partitions the internal space of the gas-liquid separation tank into a first space for accommodating a gas and a second space for accommodating a liquid, the second space being located below the first space in a vertical direction,
has a first opening that connects the first space with an outside and a second opening that connects the second space with an outside, and
is connected to the gas supply/suction device via the first opening and to the liquid accommodating part of the organ model via the second opening.

3. The human body simulation device according to claim 2, wherein the partition member has a flat plate shape having a first main surface facing the first space and a second main surface facing the second space, and
the partition member further includes a through-hole formed therein, the through-hole penetrating the first main surface and the second main surface.

4. The human body simulation device according to any one of claims 1 to 3, further comprising a control device that controls a supply amount and a supply time of the gas by the gas supply/suction device and a suction amount and a suction time of the gas by the gas supply/suction device,
wherein the control device repeats a motion of causing the gas supply/suction device to supply a first predetermined amount of gas to the gas-liquid separation tank for a first predetermined time and then causing the gas supply/suction device to suck a second predetermined amount of gas from the gas-liquid separation tank for a second predetermined time, and
in a case where the gas supply/suction device supplies the gas to the gas-liquid separation tank for the first time after the control device is started, the supply of the first predetermined amount of gas to the gas-liquid separation tank is performed for a third predetermined time that is longer than the first predetermined time.

5. The human body simulation device according to any one of claims 1 to 4, wherein the organ model is a heart model simulating an outer shape of a heart, and
the gas supply/suction device and the gas-liquid separation tank function as a heartbeat portion that simulates beating of the heart model by expanding and contracting the heart model.

6. The human body simulation device according to any one of claims 1 to 4, wherein the organ model is a diaphragm model simulating an outer shape of a diaphragm, and
the gas supply/suction device and the gas-liquid separation tank function as a respiratory motion portion that simulates a movement of the diaphragm model associated with a respiratory motion by expanding and contracting the diaphragm model.
